# FASCICULE DE BREVET EUROPEEN

(11) **EP 3 820 722 B1**
(45) Date de publication et mention de la délivrance du brevet: **23.03.2022**
(21) Numéro de dépôt: 19748874.5
(22) Date de dépôt: 10.07.2019
(51) Int. Cl.: B60C 15/06, B60C 15/024, B60C 13/00

(54) **PNEUMATIQUE COMPORTANT DES FLANCS RENFORCES**
REIFEN MIT VERSTÄRKTEN SEITENWÄNDEN
TYRE HAVING REINFORCED SIDEWALLS

(30) Priorité: 11.07.2018 FR 1856385
(43) Date de publication de la demande: 19.05.2021
(73) Titulaire: COMPAGNIE GENERALE DES ETABLISSEMENTS MICHELIN, 63000 Clermont-Ferrand (FR)
(72) Inventeur: BARTON, Christopher, 63040 CLERMONT-FERRAND Cedex 9 (FR); CHEBAUT, Christophe, 63040 CLERMONT-FERRAND Cedex 9 (FR); JUDE, Mael, 63040 CLERMONT-FERRAND Cedex 9 (FR); ROLLAND, Maxime, 63040 CLERMONT-FERRAND Cedex 9 (FR)
(74) Mandataire: Le Cam, Stéphane Georges Elie
(86) Numéro de dépôt international: PCT/FR2019/051732
(87) Numéro de publication internationale: WO 2020/012122

(56) Documents cités:
- WO-A1-2018/011509
- GB-A- 2 065 573
- JP-A- 2000 158 919
- US-A1- 2006 000 199

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

De telles conceptions de pneumatiques sont par exemple décrites dans les documents FR 2779387 ou US 2006/0000199 ou encore GB 2 065 573.

La présence de ces couches d'éléments de renforcement ou raidisseurs contribuent à épaissir la zone du bourrelet jusqu'au bas de la zone du flanc en direction de la zone du pneumatique où celui-ci présente sa largeur axiale la plus importante. Ce profil du pneumatique semble générer des fragilités du pneumatique au regard de certains type de chocs notamment lorsque le pneumatique vient au contact de bordures de trottoir.

Les inventeurs se sont ainsi donnés pour mission de fournir des pneumatiques pour véhicules "Poids-Lourds", dont les performances d'endurance notamment l'endurance des zones des bourrelets sont conservées et dont la conception permet de réduire les risques de dommages lorsque le pneumatique vient au contact d'une bordure de trottoir.

Ce but a été atteint selon l'invention par un pneumatique destiné à être monté sur une jante creuse de type « 15° drop centre », comprenant une armature de carcasse radiale, constituée d'une unique couche d'armature de carcasse formée d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, ledit retournement d'armature de carcasse étant renforcé par au moins une couche d'éléments de renforcement ou raidisseur, et, dans une coupe méridienne dudit pneumatique,
- tout point du profil de la surface extérieure S du pneumatique, entre un premier point F, lui-même défini par l'intersection d'une droite d'orientation axiale, passant par le point E axialement le plus extérieur de la partie principale de la couche d'armature de carcasse et la surface extérieure S du pneumatique, et un point A est à une distance T, constante, de la partie principale de la couche d'armature de carcasse, ladite distance étant mesurée en tout point selon une direction normale à la partie principale de la couche d'armature de carcasse,
- le point A est radialement extérieur à un premier cercle C1 de rayon R1 centré sur l'extrémité du retournement de la couche d'armature de carcasse, R1 étant compris entre 8 et 13 mm,
- radialement à l'intérieur du point A, la surface extérieure S du pneumatique se prolonge par un arc de cercle de rayon R2 dont le centre est axialement extérieur à la surface S du pneumatique, et dont le rayon R2 est compris entre 50% et 125% de la distance entre le point F et le centre de gravité de la tringle,
- l'arc de cercle de rayon R2 est tangent à son extrémité radialement la plus intérieure B à un arc de cercle de rayon R3 dont le centre est axialement intérieur à la surface S du pneumatique, et prolongeant la surface extérieure S du pneumatique radialement vers l'intérieur jusqu'au point C, ledit point C étant un point de tangence entre l'arc de cercle de rayon R3 et le cercle C2 de rayon R1 centré sur l'extrémité radialement la plus extérieure du raidisseur,
- ledit point C étant radialement intérieur au point D axialement le plus extérieur du cercle C2,
- le rayon R3 étant compris entre 50% et 125% de la distance entre le point F et le centre de gravité de la tringle.

Au sens de l'invention, une jante creuse de type « 15° drop center » ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

La coupe méridienne du pneumatique est définie conformément à l'invention telle que les barycentres des tringles forment une droite orientée axialement, lesdits barycentres étant distants l'un de l'autre d'une distance égale à la largeur de la jante nominale J augmentée de 20 mm et diminuée de deux fois la distance mesurée axialement entre un barycentre d'une tringle et un point de la surface extérieure du pneumatique.

La position du point axialement le plus extérieur de la partie principale de l'armature de carcasse est déterminée sur un pneumatique monté et gonflé selon les conditions nominales. Cette détermination peut être réalisée par exemple selon une technique de tomographie.

La distance T est mesurée selon la normale à la partie principale de la couche d'armature de carcasse entre le point axialement le plus extérieur d'un renfort de la couche d'armature de carcasse et un point de ladite surface S.

Au sens de l'invention, une distance T constante signifie que la distance T ne varie pas de plus de 0.5 mm. Les variations d'épaisseur ne sont alors dues qu'aux phénomènes de fluage lors de la fabrication et de la cuisson du pneumatique.

Le centre de gravité de la tringle est déterminé sur une coupe méridienne du pneumatique.

Selon un mode de réalisation préféré de l'invention, le rayon R2 est supérieur à 1.5 fois le rayon R1 et de préférence inférieur à 8 fois le rayon R1.

Avantageusement selon l'invention, la distance T, mesurée selon une direction normale à la partie principale de la couche d'armature de carcasse, est supérieure à 3 mm et de préférence inférieure à 7 mm.

Les essais ont montré que les pneumatiques ainsi réalisés selon l'invention présentent moins de dégradation et résistent donc mieux en termes d'usure due aux chocs et/ou frottement sur les bordures de trottoir. Par ailleurs, les pneumatiques selon l'invention semblent conserver des performances en termes d'endurance, et notamment en termes d'endurance des zones des bourrelets, au moins aussi bonnes que celles des pneumatiques de conception plus usuelle.

Ces résultats sont d'autant plus surprenants que les conceptions plus usuelles de ce type de pneumatiques comportent une zone du bourrelet relativement épaisse jusqu'au bas de la zone du flanc en direction de la zone du pneumatique où celui-ci présente sa largeur axiale la plus importante, notamment pour mieux absorber les agressions dues aux chocs ou frottements subis lors de contact avec les bordures de trottoir.

Les inventeurs ont ainsi su mettre en évidence que les pneumatiques réalisés conformément à l'invention et qui présentent une zone du bourrelet relativement peu épaisse dans sa partie radialement la plus extérieure permettent de mieux résister aux agressions en cas de contact avec les bordures de trottoir tout en conservant des propriétés en termes d'endurance satisfaisantes.

Les inventeurs pensent interpréter ce résultat du fait du profil de la surface extérieure du pneumatique entre le point F et le point C, définis ci-dessus, qui conduit à une modification dudit profil entre la zone liant le flanc au bourrelet d'un pneumatique ladite zone permettant d'augmenter la partie du flanc présentant une épaisseur T constante. Selon les inventeurs un tel profil conduirait à des déformations plus homogènes du pneumatique lors de contacts avec les bordures de trottoir et permettrait de limiter les risques d'abrasion et/ou d'arrachement au niveau de la surface extérieure du pneumatique. En effet, lors d'un choc avec une bordure de trottoir, la zone de contact du pneumatique est effectivement la surface extérieure de celui-ci et plus particulièrement la zone située entre les points F et A tels que définis précédemment. L'épaisseur constante T du flanc semble permettre une déformation plus homogène et ainsi une meilleure répartition des efforts subis en cas de choc ou frottement sur une bordure de trottoir.

Les inventeurs ont encore su mettre en évidence que le profil de la surface extérieure du pneumatique selon l'invention entre le point F et le point C peut encore éviter des problèmes d'usure dans le cas de pneumatiques en monte jumelés. En effet, ils ont montré que le profil du pneumatique favorise l'évacuation de cailloux qui pourraient venir se coincer entre les pneumatiques avant que lesdits cailloux ne causent des dommages dans la zone du bourrelet du pneumatique.

Selon une variante avantageuse de l'invention, la distance radiale entre le point F et le point A est supérieure à 70% de la distance radiale entre le point F et le point G radialement le plus extérieur de la surface extérieure S du pneumatique, pour lequel la distance, mesurée selon une direction normale à la partie principale de la couche d'armature de carcasse, entre ladite partie principale de la couche d'armature de carcasse et la surface S est égale à T, ladite distance entre tout point, de la surface extérieure S du pneumatique, radialement compris entre les points F et G et la partie principale de la couche d'armature de carcasse étant constante.

Selon cette variante avantageuse de l'invention, le profil du flanc ainsi défini semble conférer une encore meilleure homogénéité de la déformation en cas de choc et/ou frottement sur une bordure de trottoir.

Selon un mode de réalisation préféré de l'invention, l'extrémité radialement la plus extérieure du raidisseur est radialement extérieure à l'extrémité du retournement de la couche d'armature de carcasse. Une telle réalisation permet d'une part d'éviter la coïncidence des extrémités respectives du raidisseur et du retournement de la couche d'armature de carcasse, lesdites extrémités étant radialement décalées. D'autre part le raidisseur assure pleinement une fonction de protection du retournement de la couche d'armature de carcasse notamment au regard du contact avec le crochet de jante et des appuis sur celui-ci lorsque le pneumatique est en roulage.

Selon d'autres modes de réalisation, l'extrémité radialement la plus extérieure du raidisseur est radialement intérieure à l'extrémité du retournement de la couche d'armature de carcasse.

Concernant l'extrémité radialement la plus intérieure du raidisseur, elle peut être radialement extérieure au point radialement le plus intérieur de la tringle. Selon d'autres modes de réalisation, le raidisseur peut être engagé radialement sous la tringle, et son extrémité radialement la plus intérieure est alors radialement intérieure à la tringle. Selon encore d'autres modes de réalisation le raidisseur peut être enroulé autour de la tringle et son extrémité radialement la plus intérieure est alors axialement intérieure à la couche d'armature de carcasse.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Selon un mode de réalisation de l'invention, notamment pour améliorer encore les performances en termes d'endurance du pneumatique, l'armature de carcasse est formée de câbles dont la structure est fortement pénétrée de mélanges polymériques. Il peut par exemple s'agir de câbles dont la construction permet d'augmenter leur pénétrabilité par les mélanges polymériques. Il peut encore s'agir de câbles dans lesquels des mélanges polymériques sont insérés lors de la fabrication des câbles eux-mêmes. Il s'agit alors par exemple de câbles à au moins deux couches, au moins une couche interne étant gainée d'une couche constituée d'une composition de caoutchouc non réticulable, réticulable ou réticulée, de préférence à base d'au moins un élastomère diénique.

De tels câbles de l'armature de carcasse présentant des taux de pénétration plus élevés qu'habituellement, peuvent permettre au pneumatique d'encore mieux répartir dans la longueur la déformation en évitant les concentrations locales conduisant à de petits rayons de courbure.

En effet, les câbles de l'armature de carcasse, ainsi définis selon l'invention, qui sont soumis à des phénomènes de flexion importante lors des chocs sur le trottoir peuvent présenter une meilleure résistance à ces phénomènes de flexion du fait de leur taux de pénétration par les mélanges caoutchouteux qui induit une meilleure homogénéité de déformation entre les zones du câble en extension et en compression dues à la flexion.

Selon une variante de réalisation de l'invention, l'armature de sommet du pneumatique est formée d'au moins deux couches de sommet de travail d'éléments de renforcement avantageusement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqués précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention notamment en référence aux figures 1 à 3 qui représentent :
- figure 1, une vue méridienne d'un schéma d'un pneumatique selon l'invention,
- figure 2, une représentation schématique agrandie de la surface extérieure du pneumatique entre la zone du bourrelet et le point F,
- figure 3, une représentation schématique agrandie de la zone d'un bourrelet d'un pneumatique de référence.

Les figures ne sont pas représentées à l'échelle pour en simplifier la compréhension.

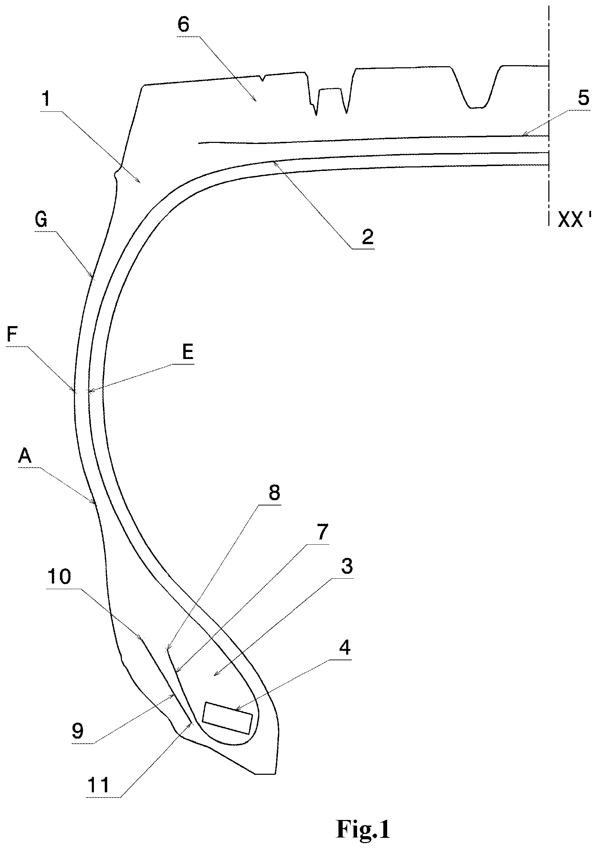

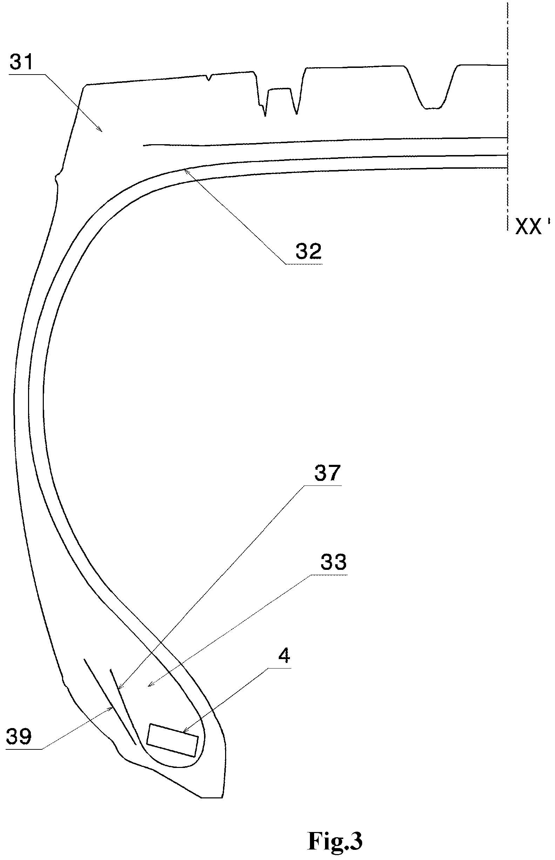

Les figures 1 et 3 ne représentent qu'une demi-vue d'un pneumatique qui se prolonge de manière symétrique par rapport à l'axe XX' qui représente le plan médian circonférentiel, ou plan équatorial, du pneumatique.

Sur la figure 1, le pneumatique 1 est de dimension 315/70 R 22.5. Ledit pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement 7 de la couche d'armature de carcasse présentant une extrémité 8.

Axialement à l'extérieur du retournement 7, on trouve un raidisseur 9 dont l'extrémité radialement la plus extérieure 10 est radialement extérieure à l'extrémité 8 du retournement 7 de la couche d'armature de carcasse.

L'extrémité 11 radialement la plus intérieure du raidisseur 9 est radialement extérieure au point radialement le plus intérieur de la tringle 4.

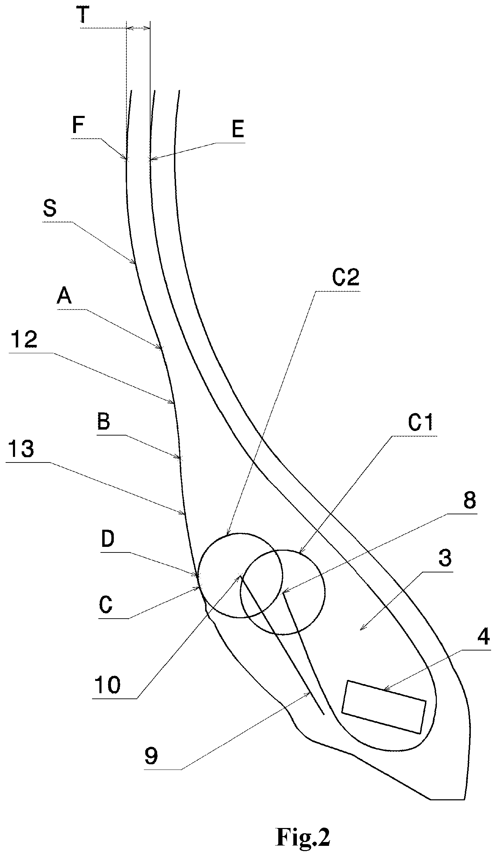

La figure 2 illustre schématiquement la surface extérieure S du pneumatique entre le point F et la zone du bourrelet 3 sur une coupe méridienne du pneumatique, définie de sorte que les barycentres des tringles 4 forment une droite orientée axialement, lesdits barycentres étant distants l'un de l'autre d'une distance égale à la largeur de la jante nominale augmentée de 20 mm et diminuée de deux fois la distance mesurée axialement entre un barycentre d'une tringle 4 et un point de la surface extérieure du pneumatique.

Le point E axialement le plus extérieur de la carcasse est, par exemple, déterminé par tomographie, le pneumatique étant monté/gonflé dans les conditions nominales.

Le point F est ensuite déterminé par une projection axiale du point E sur la surface extérieure S du pneumatique.

La surface extérieure S du pneumatique décrit une première portion depuis le point F jusqu'au point A, celui-ci étant radialement extérieur au cercle C1, de rayon R1 centré sur l'extrémité 8 du retournement de la couche d'armature de carcasse.

La distance T mesurée entre tout point de la surface extérieure S du pneumatique et la partie principale de la couche d'armature de carcasse, ladite distance étant mesurée en tout point selon une direction normale à la partie principale de la couche d'armature de carcasse est égale à 4.7 mm et sensiblement constante sur cette portion comprise entre les points F et A.

Le rayon R1 du cercle 1 est égal à 8.3 mm.

La surface extérieure S du pneumatique se prolonge ensuite radialement vers l'intérieur par un arc de cercle 12 de rayon R2, lui-même tangent en B à un arc de cercle 13, de rayon R3, le dit arc de cercle prolongeant la surface extérieure S du pneumatique jusqu'au point C.

Le point C est le point de tangence entre l'arc de cercle 13 et le cercle C2 centré sur l'extrémité radialement la plus extérieure du raidisseur.

Le point C est radialement intérieur au point D axialement le plus extérieur du cercle C2.

Le rayon R2 est égal à 90 mm.

Le rayon R3 est égal à 121 mm.

La distance entre le point F et le centre de gravité de la tringle est égale à 119 mm.

Les rayons R2 et R3 sont donc bien compris entre 50% et 125% de cette distance entre le point F et le centre de gravité de la tringle

La distance radiale entre le point F et le point A est égale à 37 mm.

Le point G, visible sur la figure 1 est le point, radialement extérieur au point F, à partir duquel la distance entre un point de la surface extérieure S du pneumatique et la partie principale de la couche d'armature de carcasse, mesurée en tout point selon une direction normale à la partie principale de la couche d'armature de carcasse, est supérieure à la distance T.

La distance radiale entre le point F et le G est égale à 38 mm.

La distance radiale entre le point F et le point A est donc bien supérieure à 70% de la distance radiale entre le point F et le G.

Des essais d'endurance ont été réalisés en faisant rouler deux pneus rabotés l'un sur l'autre avec une pression régulée de 5.5b, et une charge de 4571 daN à une vitesse de 50km/h et à une température ambiante de 15°C pendant 20000 km.

Les pneumatiques selon l'invention sont comparés à des pneumatiques de référence dont le profil de la surface extérieur est plus usuel. Un tel profil de pneumatique est représenté sur la figure 3.

Sur cette figure 3 qui représente un pneumatique 31 de même dimension, il apparait que la zone du bourrelet 33 est semblable à celle du pneumatique selon l'invention et que la structure de la couche d'armature de carcasse 32 est identique, celle-ci étant retournée autour d'une tringle 34 pour former un retournement 37 renforcé par un raidisseur 39. Par contre, le profil de la surface extérieure du pneumatique 31 est différent de celui du pneumatique selon l'invention.

Les essais ont été réalisés pour les pneumatiques selon l'invention avec des conditions identiques à celles appliquées aux pneumatiques de référence.

Les pneumatiques selon l'invention présentent des résultats sensiblement identiques à ceux des pneumatiques de référence.

D'autres essais ont été menés pour tester les performances de résistance aux chocs et/ou frottements sur des bordures de trottoir.

Pour réaliser ces essais les pneumatiques sont en outre pourvus de stries radiales sur leur flanc.

Ces essais sont réalisés sur un trottoir présentant une bordure de 15 cm de hauteur. Le pneumatique est monté sur un véhicule dont la trajectoire conduit le pneumatique à une vitesse de 20 km/h avec un angle d'incidence par rapport au trottoir de 10°.

L'opération est répétée 6 fois et ensuite le flanc est analysé pour observer les éventuels arrachements.

Le pneumatique de référence présente deux arrachements comme le pneumatique selon l'invention.

Concernant la surface agressée par le trottoir, elle est 10% plus faible sur le pneumatique selon l'invention en comparaison du pneumatique de référence.

## Revendications

1. - Pneumatique (1), destiné à être monté sur une jante creuse de type « 15° drop centre », comprenant une armature de carcasse radiale (2), constituée d'une unique couche d'armature de carcasse formée d'éléments de renforcement, ledit pneumatique comprenant une armature de sommet (5), elle-même coiffée radialement d'une bande de roulement (6), ladite bande de roulement (6) étant réunie à deux bourrelets (3) par l'intermédiaire de deux flancs, la couche d'éléments de renforcement de l'armature de carcasse (2) étant ancrée dans chacun des bourrelets (3) par retournement autour d'une tringle (4) pour former une partie principale de la couche d'armature de carcasse s'étendant d'une tringle (4) à l'autre et un retournement (7) de la couche d'armature de carcasse (2) dans chacun des bourrelets (3), ledit retournement (7) d'armature de carcasse (2) étant renforcé par au moins une couche d'éléments de renforcement ou raidisseur (9), **caractérisé en ce que** dans une coupe méridienne dudit pneumatique,
- tout point du profil de la surface extérieure (S) du pneumatique, entre un premier point (F), lui-même défini par l'intersection d'une droite d'orientation axiale, passant par le point (E) axialement le plus extérieur de la partie principale de la couche d'armature de carcasse (2) et la surface extérieure (S) du pneumatique, et un point (A) est à une distance T constante de la partie principale de la couche d'armature de carcasse (2), ladite distance étant mesurée en tout point selon une direction normale à la partie principale de la couche d'armature de carcasse (2),
- le point (A) est radialement extérieur à un premier cercle (C1) de rayon R1 centré sur l'extrémité (8) du retournement (7) de la couche d'armature de carcasse (2), R1 étant compris entre 8 et 13 mm,
- radialement à l'intérieur du point (A), la surface extérieure (S) du pneumatique se prolonge par un arc de cercle de rayon R2 dont le centre est axialement extérieur à la surface (S) du pneumatique, et dont le rayon R2 est compris entre 50% et 125% de la distance entre le point (F) et le centre de gravité de la tringle (4),
- l'arc de cercle de rayon R2 est tangent à son extrémité radialement la plus intérieure (B) à un arc de cercle de rayon R3 dont le centre est axialement intérieur à la surface (S) du pneumatique, et prolongeant la surface extérieure (S) du pneumatique radialement vers l'intérieur jusqu'au point (C), ledit point (C) étant un point de tangence entre l'arc de cercle de rayon R3 et le cercle (C2) de rayon R1 centré sur l'extrémité radialement la plus extérieure (10) du raidisseur (9),
- ledit point (C) étant radialement intérieur au point (D) axialement le plus extérieur du cercle (C2),
- le rayon R3 étant compris entre 50% et 125% de la distance entre le point (F) et le centre de gravité de la tringle (4).

2. - Pneumatique (1) selon la revendication 1, **caractérisé en ce que** la distance T, mesurée selon une direction normale à la partie principale de la couche d'armature de carcasse, est supérieure à 3 mm et de préférence inférieure à 7 mm.

3. - Pneumatique (1) selon l'une des revendications 1 ou 2, **caractérisé en ce que** la distance radiale entre le point (F) et le point (A) est supérieure à 70% de la distance radiale entre le point (F) et le point (G) radialement le plus extérieur de la surface extérieure (S) du pneumatique, pour lequel la distance, mesurée selon une direction normale à la partie principale de la couche d'armature de carcasse (2), entre ladite partie principale de la couche d'armature de carcasse (2) et la surface (S) est égale à T, ladite distance entre tout point, de la surface extérieure (S) du pneumatique, radialement compris entre les points (F) et (G) et la partie principale de la couche d'armature de carcasse (2) étant constante.

4. - Pneumatique (1) selon l'une des revendications précédentes, **caractérisé en ce que,** l'extrémité (10) radialement la plus extérieure du raidisseur (9) est radialement extérieure à l'extrémité (8) du retournement (7) de la couche d'armature de carcasse (2).

5. - Pneumatique (1) selon l'une des revendications précédentes, **caractérisé en ce que** les éléments de renforcement de la couche d'armature de carcasse (2) sont des câbles à au moins deux couches, au moins une couche interne étant gainée d'une couche constituée d'une composition de caoutchouc non réticulable, réticulable ou réticulée, de préférence à base d'au moins un élastomère diénique.

6. - Pneumatique (1) selon l'une des revendications précédentes, **caractérisé en ce que,** dans tout plan méridien, dans chaque bourrelet, le pneumatique (1) comporte une armature de contention entourant la tringle (4) et un volume de mélange caoutchouteux directement au contact de la tringle (4).

## Patentansprüche

1. Reifen (1), welcher dazu bestimmt ist, auf einer hohlen Felge vom Typ "Steilschulterfelge" montiert zu werden, und welcher eine radiale Karkassenbewehrung (2) umfasst, die aus einer einzigen Karkassenbewehrungsschicht besteht, die von Verstärkungselementen gebildet wird, wobei der Reifen eine Scheitelbewehrung (5) umfasst, die ihrerseits radial von einem Laufstreifen (6) bedeckt ist, wobei der Laufstreifen (6) über zwei Seitenwände mit zwei Wülsten (3) verbunden ist, wobei die Schicht von Verstärkungselementen der Karkassenbewehrung (2) in jedem der Wülste (3) durch Umschlag um einen Wulstkern (4) verankert ist, um einen Hauptteil der Karkassenbewehrungsschicht, der sich von einem Wulstkern (4) zum anderen erstreckt, und einen umgeschlagenen Teil (7) der Karkassenbewehrungsschicht (2) in jedem der Wülste (3) zu bilden, wobei der umgeschlagene Teil (7) der Karkassenbewehrung (2) durch mindestens eine Schicht von Verstärkungselementen oder Versteifung (9) verstärkt ist, **dadurch gekennzeichnet, dass** in einem Meridianschnitt des Reifens
- jeder Punkt des Profils der Außenseite (S) des Reifens zwischen einem ersten Punkt (F), der seinerseits durch den Schnitt einer Geraden mit axialer Ausrichtung, die durch den axial äußersten Punkt (E) des Hauptteils der Karkassenbewehrungsschicht (2) verläuft, und der Außenseite (S) des Reifens definiert ist, und einem Punkt (A) sich in einem konstanten Abstand T vom Hauptteil der Karkassenbewehrungsschicht (2) befindet, wobei dieser Abstand in jedem Punkt in einer zum Hauptteil der Karkassenbewehrungsschicht (2) senkrechten Richtung gemessen wird,
- der Punkt (A) sich radial außerhalb eines ersten Kreises (C1) mit einem Radius R1 befindet, der auf dem Ende (8) des umgeschlagenen Teils (7) der Karkassenbewehrungsschicht (2) zentriert ist, wobei R1 zwischen 8 und 13 mm liegt,
- radial innerhalb des Punktes (A) die Außenseite (S) des Reifens sich in einem Kreisbogen mit einem Radius R2 fortsetzt, dessen Mittelpunkt axial außerhalb der Oberfläche (S) des Reifens liegt und dessen Radius R2 zwischen 50 % und 125 % des Abstands zwischen dem Punkt (F) und dem Schwerpunkt des Wulstkerns (4) beträgt,
- der Kreisbogen mit dem Radius R2 an seinem radial innersten Ende (B) tangential zu einem Kreisbogen mit einem Radius R3 ist, dessen Mittelpunkt sich axial innerhalb der Oberfläche (S) des Reifens befindet und der die Außenseite (S) des Reifens radial nach innen bis zu einem Punkt (C) fortsetzt, wobei der Punkt (C) ein Berührungspunkt zwischen dem Kreisbogen mit dem Radius R3 und dem auf dem radial äußersten Ende (10) der Versteifung (9) zentrierten Kreis (C2) mit dem Radius R1 ist,
- der Punkt (C) sich radial innerhalb des axial äußersten Punktes (D) des Kreises (C2) befindet,
- der Radius R3 zwischen 50 % und 125 % des Abstands zwischen dem Punkt (F) und dem Schwerpunkt des Wulstkerns (4) beträgt.

2. Reifen (1) nach Anspruch 1, **dadurch gekennzeichnet, dass** der in einer zum Hauptteil der Karkassenbewehrungsschicht senkrechten Richtung gemessene Abstand T größer als 3 mm und vorzugsweise kleiner als 7 mm ist.

3. Reifen (1) nach einem der Ansprüche 1 oder 2, **dadurch gekennzeichnet, dass** der radiale Abstand zwischen dem Punkt (F) und dem Punkt (A) größer als 70 % des radialen Abstands zwischen dem Punkt (F) und dem radial äußersten Punkt (G) der Außenseite (S) des Reifens ist, für welchen der in einer zum Hauptteil der Karkassenbewehrungsschicht (2) senkrechten Richtung gemessene Abstand zwischen dem Hauptteil der Karkassenbewehrungsschicht (2) und der Oberfläche (S) gleich T ist, wobei dieser Abstand zwischen jedem Punkt der Außenseite (S) des Reifens, der radial zwischen den Punkten (F) und (G) liegt, und dem Hauptteil der Karkassenbewehrungsschicht (2) konstant ist.

4. Reifen (1) nach einem der vorhergehenden Ansprüche, **dadurch gekennzeichnet, dass** sich das radial äußerste Ende (10) der Versteifung (9) radial außerhalb des Endes (8) des umgeschlagenen Teils (7) der Karkassenbewehrungsschicht (2) befindet.

5. Reifen (1) nach einem der vorhergehenden Ansprüche, **dadurch gekennzeichnet, dass** die Verstärkungselemente der Karkassenbewehrungsschicht (2) Seile mit mindestens zwei Schichten sind, wobei mindestens eine innere Schicht von einer Schicht umhüllt ist, die aus einer nicht vernetzbaren, vernetzbaren oder vernetzten Kautschukzusammensetzung besteht, vorzugsweise auf der Basis mindestens eines Dienelastomers.

6. Reifen (1) nach einem der vorhergehenden Ansprüche, **dadurch gekennzeichnet, dass** in jeder Meridianebene in jedem Wulst der Reifen (1) eine Fixierungsbewehrung, die den Wulstkern (4) umgibt, und ein Volumen einer Kautschukmischung, das sich direkt in Kontakt mit dem Wulstkern (4) befindet, aufweist.

## Claims

1. -Tyre (1) intended to be mounted on a hollow rim of the " 15° drop centre" type, comprising a radial carcass reinforcement (2) made up of a single carcass reinforcement layer formed of reinforcing elements, said tyre comprising a crown reinforcement (5), itself capped radially by a tread (6), said tread (6) being joined to two beads (3) via two sidewalls, the layer of reinforcing elements of the carcass reinforcement (2) being anchored in each of the beads (3) by being turned up around a bead wire (4) so as to form a main part of the carcass reinforcement layer extending from one bead wire (4) to the other and a turn-up (7) of the carcass reinforcement layer (2) in each of the beads (3), said turn-up (7) of the carcass reinforcement (2) being reinforced by at least one layer of reinforcing elements or stiffener (9), **characterized in that** in a meridian cross section of said tyre,
- any point of the profile of the outer surface (S) of the tyre, between a first point (F), itself defined by the intersection of an axially oriented straight line, passing through the axially outermost point (E) of the main part of the carcass reinforcement layer (2) and the outer surface (S) of the tyre, and a point (A), is at a constant distance T from the main part of the carcass reinforcement layer (2), said distance being measured at any point in a direction normal to the main part of the carcass reinforcement layer (2),
- the point (A) is radially on the outside of a first circle (C1) of radius R1 that is centred on the end (8) of the turn-up (7) of the carcass reinforcement layer (2), R1 being between 8 and 13 mm,
- radially on the inside of the point (A), the outer surface (S) of the tyre is continued by a circular arc of radius R2, the centre of which is axially on the outside of the surface (S) of the tyre, and the radius R2 of which is between 50% and 125% of the distance between the point (F) and the centre of gravity of the bead wire (4),
- the circular arc of radius R2 is tangent at its radially innermost end (B) to a circular arc of radius R3, the centre of which is axially on the inside of the surface (S) of the tyre, and continues the outer surface (S) of the tyre radially inwards as far as the point (C), said point (C) being a point of contact between the circular arc of radius R3 and the circle (C2) of radius R1 centred on the radially outermost end (10) of the stiffener (9),
- said point (C) being radially on the inside of the axially outermost point (D) of the circle (C2),
- the radius R3 being between 50% and 125% of the distance between the point (F) and the centre of gravity of the bead wire (4).

2. - Tyre (1) according to Claim 1, **characterized in that** the distance T, measured in a direction normal to the main part of the carcass reinforcement layer, is greater than 3 mm and preferably less than 7 mm.

3. - Tyre (1) according to either of Claims 1 and 2, **characterized in that** the radial distance between the point (F) and the point (A) is greater than 70% of the radial distance between the point (F) and the radially outermost point (G) of the outer surface (S) of the tyre, for which the distance, measured in a direction normal to the main part of the carcass reinforcement layer (2), between said main part of the carcass reinforcement layer (2) and the surface (S), is equal to T, said distance between any point, on the outer surface (S) of the tyre, radially between the points (F) and (G) and the main part of the carcass reinforcement layer (2) being constant.

4. - Tyre (1) according to one of the preceding claims, **characterized in that** the radially outermost end (10) of the stiffener (9) is radially on the outside of the end (8) of the turn-up (7) of the carcass reinforcement layer (2).

5. - Tyre (1) according to one of the preceding claims, **characterized in that** the reinforcing elements of the carcass reinforcement layer (2) are cords having at least two layers, at least one internal layer being sheathed with a layer made of a rubber composition that is not crosslinkable, is crosslinkable or is crosslinked, preferably based on at least one diene elastomer.

6. - Tyre (1) according to one of the preceding claims, **characterized in that,** in any meridian plane, in each bead, the tyre (1) has a retention reinforcement surrounding the bead wire (4) and a volume of rubber compound in direct contact with the bead wire (4).
